# DEMANDE DE BREVET EUROPEEN

(11) **EP 0 818 329 A1**
(43) Date de publication de la demande: **14.01.1998**
(21) Numéro de dépôt: 97111383.2
(22) Date de dépôt: 05.07.1997
(51) Int. Cl.: B60B 21/06, B60B 1/04, B21D 28/30

(54) **Procédé de perçage d'une jante à rayon, jante percée selon le procédé, insert adapté pour équiper la jante, et roue notamment de cycle**

(30) Priorité: 12.07.1996 FR 9609048
(71) Demandeur: MAVIC S.A., 01990 Saint-Trivier sur Moignans (FR)
(72) Inventeur: Mercat, Jean-Pierre, 01990 Chaneins (FR); Minville, Alban, 71570 Romaneche Thorens (FR)
(74) Mandataire: Lejeune, Benoit

(57) **Abrégé**

L'invention concerne le procédé de fabrication d'une jante pour roue à rayons, notamment une jante de cycle.

Le pont supérieur (5) de la jante est percé d'une pluralité d'orifices débouchants au moyen d'un foret de perçage par refoulement opérant en direction du pont inférieur (5) de manière à créer une cheminée de refoulement (15) au niveau de chaque orifice du pont supérieur, dont la longueur est supérieure à l'épaisseur du pont.

La jante est équipée d'inserts prévus pour recevoir les écrous de rayons. Les inserts sont ou bien encastrés dans les orifices en cheminée, ou bien vissés.

## Description

L'invention concerne un procédé de perçage d'une jante à rayon, notamment une jante pour cycle. L'invention concerne également une jante percée selon le procédé, un insert adapté pour équiper la jante ainsi percée, une jante équipée de tels inserts, ainsi qu'une roue présentant une jante équipée des inserts.

De façon connue, une roue, notamment de bicyclette, comprend un moyeu central relié par deux nappes de rayons à une jante circulaire. La jante est formée de deux ponts annulaires reliés par deux flancs latéraux. Les flancs latéraux se prolongent vers l'extérieur, de façon à former avec le pont supérieur un canal annulaire prévu pour recevoir un pneumatique. Pour certaines jantes qui sont prévues pour recevoir un boyau, le canal est une simple rainure formée par un affaissement du pont supérieur vers l'intérieur. Les rayons sont reliés à la jante par des écrous vissés à l'extrémité des rayons. Ces écrous permettent par ailleurs de régler la tension des rayons.

Pour recevoir les écrous de rayons, de façon usuelle, les deux ponts de la jante sont percés d'orifices répartis à la circonférence de la jante. Les orifices du pont inférieur sont prévus pour servir d'assise aux têtes d'écrous. Les orifices du pont supérieur, de diamètre supérieur, sont situés dans l'alignement des orifices du pont inférieur, et sont prévus pour permettre la mise en place de l'écrou de rayon depuis l'extérieur.

Pour améliorer les conditions dans lesquelles la tête d'écrou prend appui contre la jante, et la répartition dans la jante des contraintes induites par la tension des rayons, il est connu d'équiper les jantes avec des oeillets qui traversent les orifices du pont inférieur. Un oeillet monobloc est décrit dans la demande de brevet EP 130 449. Ces oeillets existent aussi en deux éléments distincts. Ces oeillets en deux parties sont assemblés par un sertissage qui assujettit l'ensemble à la périphérie d'un orifice du pont inférieur. L'une des deux parties de ces oeillets est un corps d'oeillet en forme de cuvette dont la partie inférieure repose sur le pont inférieur, et la partie supérieure présente un rebord qui s'appuie contre le pont supérieur. Le fond des oeillets est percé pour le passage du corps d'écrou. Ces oeillets doubles sont avantageux car ils établissent des liaisons mécaniques entre les deux ponts, ce qui renforce la structure de la jante et sa résistance à la déformation.

Cependant, pour de telles jantes, les orifices constituent des zones de faiblesse locales qui fragilisent chacun des deux ponts.

Un autre problème est que les oeillets imposent certaines contraintes quant aux dimensions en section de la jante. En effet, les oeillets sont réalisés le plus souvent en inox par emboutissage. La hauteur d'un oeillet est de ce fait limitée, ce qui impose une distance maximale déterminée entre les deux ponts de la jante.

En outre, l'oeillet présente dans sa partie supérieure une collerette par laquelle l'oeillet repose sur le pont extérieur. Cette collerette présente un diamètre ou une dimension en largeur qui est supérieur au diamètre du corps de l'oeillet. De ce fait, elle impose que le pont supérieur présente une largeur au moins égale à cette dimension en largeur de la collerette.

A ce sujet, on connaît la demande de brevet européen publiée sous le numéro EP 714 791 concernant un oeillet adapté pour équiper une jante profilée. Cet oeillet peut équiper des jantes dont la section présente des dimensions importantes en hauteur et réduites en largeur. Toutefois, les orifices pour la pose de l'oeillet sont tous les deux réalisés par découpe ce qui crée des zones de faiblesse locales de la jante, comme cela a été mentionné précédemment.

Un but de l'invention est de proposer un procédé de perçage d'une jante et une jante obtenue par le procédé qui améliore la résistance mécanique de la jante.

Un autre but de l'invention est de proposer un procédé de perçage et une jante qui facilitent la pose des inserts ou oeillets.

D'autres buts et avantages de l'invention apparaîtront au cours de la description qui va suivre.

Le procédé selon l'invention de réalisation d'une jante percée d'orifices prévus pour recevoir des rayons de liaison avec un moyeu, la jante présentant un caisson avec un pont supérieur et un pont inférieur est caractérisé par le fait que le pont supérieur est percé d'une pluralité d'orifices débouchants percés au moyen d'un foret de perçage par refoulement opérant en direction du pont inférieur, de façon à créer une cheminée de refoulement au niveau de chaque orifice du pont supérieur, dont la longueur est supérieure à l'épaisseur du pont.

La jante obtenue par la mise en oeuvre du procédé de l'invention est caractérisée par le fait qu'au moins le pont supérieur présente une pluralité d'orifices débouchants délimités par une cheminée de refoulement de hauteur supérieure à l'épaisseur du pont.

La roue, notamment roue de cycle, est caractérisée par le fait qu'elle présente une jante obtenue par la mise en oeuvre du procédé de l'invention.

L'invention sera mieux comprise en se référant à la description qui va suivre et aux dessins en annexe qui en font partie intégrante.

La figure 1 est une vue générale de côté d'une roue.

La figure 2 est une vue de face de la roue de la figure 1.

La figure 3 est une vue partielle de face et en coupe par un plan de section transversale d'une jante à l'état brut.

La figure 4 illustre l'opération de perçage de la jante selon un premier mode de mise en oeuvre de l'invention.

La figure 5 montre le résultat de l'opération de perçage.

La figure 6 est une vue de face d'un insert prévu pour équiper la jante.

La figure 7 est une vue en coupe transversale de l'insert de la figure 6.

La figure 8 est une vue en section de la jante au niveau d'un insert.

La figure 9 représente en vue de face un insert selon une variante de mise en oeuvre.

La figure 10 est une vue en coupe transversale de l'insert de la figure 9.

La figure 11 est une vue en section de la jante au niveau d'un insert.

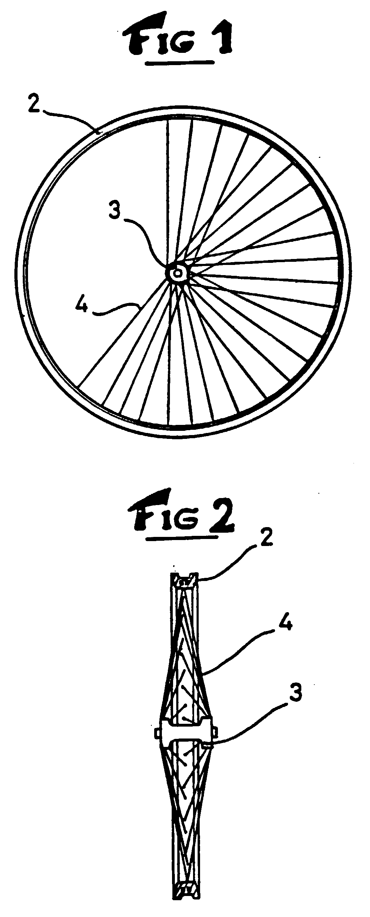

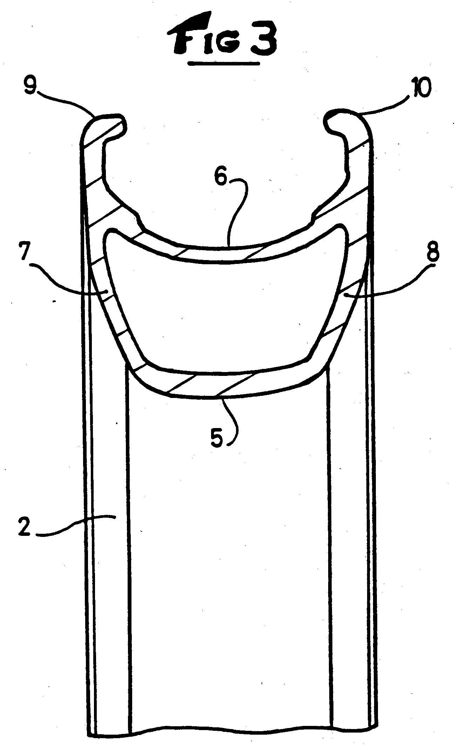

La figure 1 représente une roue de bicyclette qui comprend une jante circulaire 2 reliée à un moyeu central 3 par des rayons 4. Seule une partie des rayons est représentée dans cette figure. De façon connue, le moyeu présente des moyens appropriés pour assurer la liaison avec le cadre. Tel que cela est visible dans la figure 2, les rayons sont répartis selon deux nappes symétriques, chacune accrochée à une extrémité du moyeu 3.

La roue représentée dans les figures 1 et 2 est une roue avant. Dans le cas d'une roue arrière, l'une des nappes de rayons est décalée vers la partie médiane du moyeu, pour que, de ce côté, le moyeu présente un embout comprenant le mécanisme de roue libre et servant de support au boîtier de pignons. Ceci est connu de l'homme de métier.

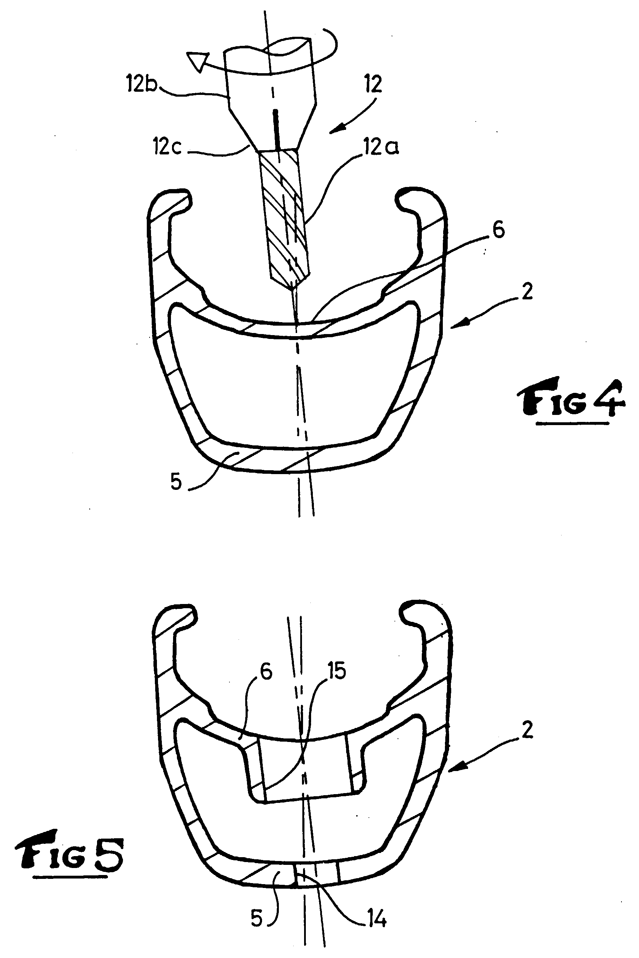

La figure 3 représente en section transversale et en vue partielle la jante 2 à l'état brut. Cette jante présente de façon connue une structure en caisson, avec un pont inférieur 5, un pont supérieur 6 reliés par des parois latérales 7 et 8. Ces parois se prolongent au-delà du pont supérieur 6 par deux ailes 9 et 10 qui forment avec le pont 6 un canal annulaire prévu pour recevoir un pneu et une chambre à air.

La jante représentée dans la figure n'est cependant pas limitative pour l'invention, ni en ce qui concerne le profil de la section, ni en ce qui concerne le montage d'un pneu. L'invention s'applique en effet aussi bien aux jantes prévues pour être équipées d'un pneu que des jantes prévues pour être équipées d'un boyau.

De façon connue, la jante telle que celle représentée en figure 3 est réalisée à partir d'un barreau profilé réalisé en alliage d'aluminium ou d'un autre alliage léger, qui est cintré, puis assemblé bout à bout au moyen d'un manchon ou par soudure. A l'état brut, les deux ponts sont des parois continues non percées.

On réalise ensuite une opération de perçage. Cette opération consiste à percer chacun des ponts supérieur et inférieur d'une succession d'orifices prévus pour l'accrochage de chacun des rayons des deux nappes. Les trous du pont supérieur et du pont inférieur sont deux à deux dans l'alignement l'un de l'autre. Selon l'invention, les orifices du pont supérieur sont percés au moins en partie par refoulement. C'est-à-dire qu'au lieu d'utiliser un foret de coupe traditionnelle qui découpe la matière et crée un copeau, on perce ici l'orifice par refoulement, en repoussant la matière dans le sens de l'avancement du foret, afin qu'il crée une sorte de cheminée. Une telle cheminée préserve une certaine continuité de la matière aux abords de l'orifice. La structure du pont est peu modifiée du fait de cette continuité, bien moins en tous les cas que pour un perçage traditionnel. Si bien que la résistance de la jante percée est améliorée par rapport à une jante traditionnelle.

La cheminée est également avantageuse car elle offre une hauteur utile qui est supérieure à l'épaisseur de la paroi du pont. Cette hauteur peut atteindre le double, voire le triple, de l'épaisseur de paroi du pont. Pour une jante réalisée en aluminium 6106, percée avec un foret de 5,5 millimètres, on a obtenu une hauteur utile de cheminée voisine de 5 millimètres sur un pont de 1,5 mm d'épaisseur. Selon l'invention, on utilise cette hauteur utile importante pour assurer le guidage et l'accrochage d'un insert prévu pour servir d'assise à un écrou de rayon.

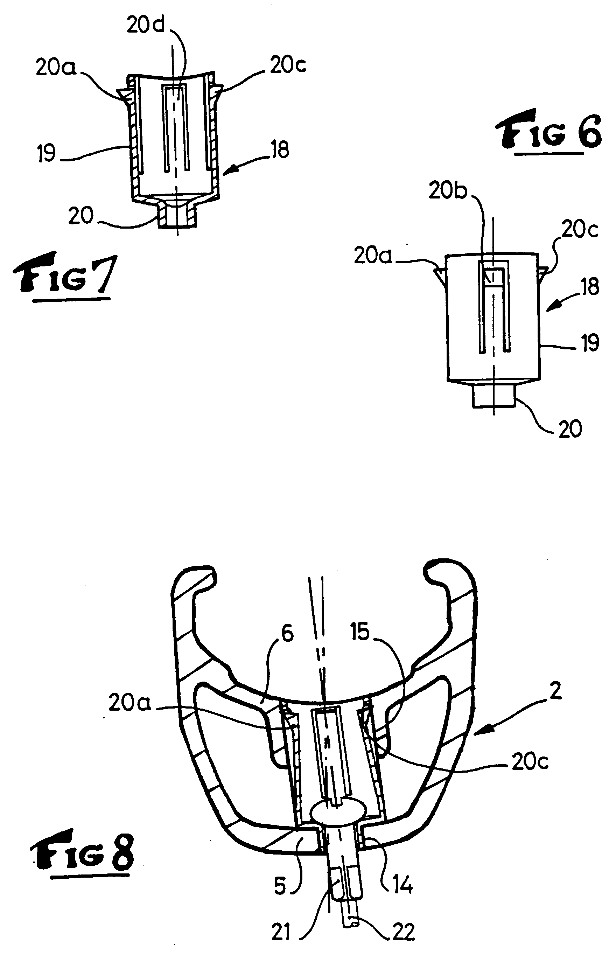

La figure 4 illustre l'opération de perçage. Selon le mode de mise en oeuvre représenté, la jante est percée au moyen d'un foret 12 à double étage. Le forêt est prévu pour percer la jante de l'extérieur vers l'intérieur. L'étage inférieur 12a est un foret de coupe traditionelle de petit diamètre. Cet étage 12a est prévu pour percer un avant-trou dans le pont supérieur 6, et pour percer ensuite le pont inférieur 5 d'un orifice 14 prévu pour le passage de l'écrou de rayon. Le diamètre de l'étage 12a est prévu en fonction du diamètre extérieur de l'écrou de rayon.

L'autre étage 12b de diamètre plus fort opère par refoulement. Il présente une tête prismatique 12c dont la pointe est prolongée de façon continue par l'étage de coupe 12a. Le corps de l'étage 12b situé en retrait par rapport à la tête 12c présente une forme cylindrique. Toute autre forme appropriée du forêt pourrait aussi convenir.

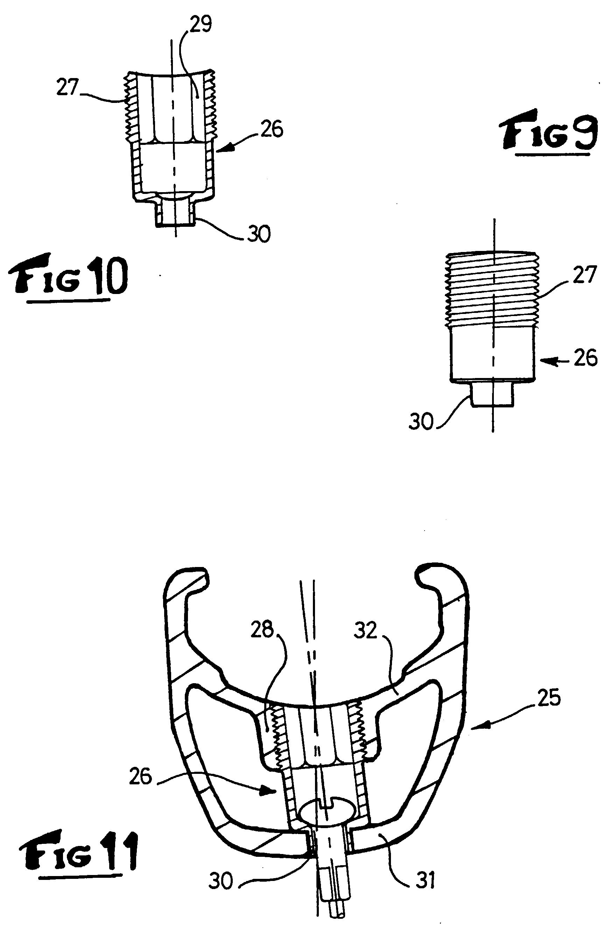

La figure 5 montre la jante percée par le foret 12. Le pont inférieur 5 présente un orifice 14 percé par l'étage de coupe 12a. Le pont supérieur 6 présente quant à lui une cheminée 15 dont la paroi est orientée vers l'intérieur du caisson de la jante. Si besoin, la face externe du pont supérieur 6 est ébavurée aux abords de la cheminée 15. Cette opération peut être réalisée avec l'opération de perçage, ou après, au cours d'une opération distincte.

Le mode de perçage décrit n'est pas limitatif, et l'on pourrait percer les deux orifices, l'orifice 14 et l'orifice de la cheminée 15 par deux opérations distinctes, au moyen de deux forets distincts. Dans ces conditions, le foret qui perce le pont supérieur n'aurait plus d'étage de coupe, mais seulement un étage de refoulement.

La figure 6 représente un premier mode de réalisation d'un insert 18 qui est prévu pour équiper la jante 2. Globalement l'insert présente un corps 19 de forme générale cylindrique, prolongé vers le bas par un col de centrage 20.

A l'intérieur, l'insert 18 présente un logement prévu pour recevoir l'écrou 21 d'un rayon. Seule l'extrémité 22 du rayon est représentée en figure 8. De façon connue, l'écrou de rayon présente une tête en forme de goutte de suif, et il se prolonge vers le bas par un corps d'écrou. De façon également connue, le corps d'écrou présente une zone 23 avec une empreinte carrée ou de toute autre forme appropriée pour l'accouplement d'un outil de serrage.

La base de l'insert 18 est prévue pour servir d'assise à la tête de l'écrou de rayon, et pour être traversée par le corps d'écrou. De préférence, il existe un léger jeu angulaire entre la base de l'insert et l'écrou, de façon que l'écrou s'oriente de lui-même dans le prolongement du rayon, lors de sa mise sous tension.

Le corps 19 de l'insert est prévu pour être introduit dans la cheminée 15. Il présente un diamètre extérieur sensiblement égal au diamètre interne de la cheminée. A sa base, l'insert 18 présente un col de centrage 20. Le col est prévu pour pénétrer dans l'orifice 14 du pont inférieur. Il présente à cet effet un diamètre externe sensiblement égal au diamètre de l'orifice 14, et une hauteur voisine de l'épaisseur du pont 5 à ce niveau.

La hauteur du corps 19 est égale ou légèrement inférieure à la distance entre les deux ponts, de telle façon que lorsque l'insert est en appui contre le pont inférieur, sa partie supérieure se trouve guidée dans la cheminée 15, comme le représente la figure 8.

Dans le mode de réalisation illustré, l'insert présente dans sa partie supérieure une pluralité de griffes 20a, 20b, 20c, 20d qui sont prévues pour se planter dans la paroi de la cheminée 15, assurant ainsi le maintien en position de l'insert en l'absence de rayon.

Les griffes sont par exemple réalisées par des languettes découpées dans la paroi de l'insert, et recourbées vers l'extérieur. L'extrémité libre des languettes est orientée vers la partie supérieure de l'insert pour autoriser un engagement de l'insert dans la cheminée et le retenir dans la direction opposée.

Tout en renforçant la rigidité du pont supérieur, la cheminée 15 facilite ici la pose des inserts car elle assure un guidage du corps de l'insert jusqu'à ce que le col de centrage soit engagé dans l'orifice 14. En outre, la paroi interne de la cheminée offre une surface relativement importante pour réaliser l'accrochage de l'insert. C'est-à-dire qu'il est possible d'avoir des tolérances de dimension relativement importantes sur la distance entre les deux ponts ou sur la hauteur de l'insert, sans compromettre la mise en place des différents éléments.

L'insert est réalisé en tout matériau approprié, par exemple dans un matériau connu sous la dénomination commerciale "ZAMAC", ou tout autre matériau approprié. La base qui sert d'assise à l'écrou de rayon et la partie supérieure du corps qui assure le guidage et l'accrochage de l'insert peuvent aussi être réalisées en des matériaux différents.

Ceci permet avantageusement de déterminer la distance entre les deux ponts indépendamment des contraintes de fabrication qui pèsent sur la fabrication des oeillets traditionnels. En outre, pourvu qu'il permette le perçage et la mise en forme de la cheminée 15, le pont supérieur peut être défini avec une largeur et une forme quelconque. Le pont inférieur pourrait également présenter une forme différente de celle représentée, par exemple, une section profilée en "V".

De plus, les moyens d'accrochage de l'insert dans la cheminée pourraient être différents, et notamment être mis en oeuvre par une opération de poinçonnage ou autre au cours de laquelle les moyens d'accrochage seraient encastrés dans la paroi de la cheminée 15.

Les figures 9 à 11 illustrent une variante de mise en oeuvre de l'invention. Selon cette variante, l'insert est non pas engagé et encliqueté dans la cheminée, mais vissé. La jante 25 présente globalement une structure semblable à la jante précédente. En particulier, elle présente un pont supérieur équipé d'orifices percés par refoulement afin de créer une cheminée, et un pont inférieur percé d'orifices dans l'alignement des cheminées.

Les figures 9 et 10 représentent un insert 26 qui est de même nature que l'insert 18, à l'exception que la partie supérieure de son corps présente un filetage 27 qui est prévu pour coopérer avec un taraudage de la cheminée 28. Le filetage 27 est prévu pour être vissé dans une cheminée taraudée lors d'une opération de taraudage. Il peut être également auto-taraudeur, c'est-à-dire créer lui-même son propre filetage dans la cheminée 28. Dans sa partie supérieure, l'insert 26 représenté dans les figures présente une empreinte hexagonale 29 prévue pour assurer l'accouplement avec un outil de serrage approprié, notamment une clé de type ALLEN. Naturellement, tout autre moyen approprié convient. Lors du serrage, l'insert en appui est en butée contre le pont inférieur 31. Eventuellement tout moyen approprié tel qu'un collage peut être utilisé pour éviter un desserrage accidentel.

Comme dans le cas précédent, l'insert présente à sa partie inférieure un col de centrage 30. Toutefois, ce col n'est pas indispensable, et l'insert pourrait reposer directement sur le pont inférieur.

De même que pour le mode de réalisation précédent, les cheminées 28 renforcent la structure du pont supérieur car elles préservent la continuité de la structure du pont aux abords des orifices. L'avantage de ce mode de construction est que l'insert établit une liaison mécanique entre les deux ponts de la même façon qu'un oeillet double traditionnel. En effet, l'insert transmet la tension du rayon à la fois au pont inférieur 31 et au pont supérieur 32, et le cas échéant la variation de cette tension. De plus, le filetage assure un guidage qui facilite la pose de l'insert.

Naturellement la présente description n'est donnée qu'à titre indicatif, et l'on pourrait adopter d'autres mises en oeuvre sans pour autant sortir du cadre de celle-ci.

## Revendications

1. Procédé de réalisation d'une jante percée d'orifices prévus pour recevoir des rayons de liaison avec un moyeu, la jante présentant un caisson avec un pont supérieur (6, 32) et un pont inférieur (5, 31), caractérisé par le fait que le pont supérieur (5, 35) est percé d'une pluralité d'orifices débouchants au moyen d'un foret de perçage par refoulement (12b) opérant en direction du pont inférieur (5, 31) de manière à créer une cheminée de refoulement (15, 28) au niveau de chaque orifice du pont supérieur, dont la longueur est supérieure à l'épaisseur du pont.

2. Procédé selon la revendication 1, caractérisé par le fait que le pont inférieur (5, 31) est percé d'un orifice débouchant (14) au moyen d'un foret de coupe (12a) de petit diamètre qui est placé dans le prolongement du foret (12b) par refoulement, en avant de celui-ci.

3. Procédé selon l'une quelconque des revendications 1 ou 2, caractérisé par le fait que la jante est équipée d'inserts (26) filetés dans leur partie supérieure, qui sont prévus pour être vissés dans l'orifice en cheminée (28) du pont supérieur.

4. Jante obtenue par la mise en oeuvre du procédé selon l'une quelconque des revendications 1 à 3, caractérisée par le fait qu'au moins le pont supérieur (6, 32) présente une pluralité d'orifices débouchants délimités par une cheminée (15, 28) de refoulement de hauteur supérieure à l'épaisseur du pont.

5. Jante selon la revendication 4, caractérisée par le fait que la cheminée (15, 28) est orientée vers l'intérieur du caisson délimité par les deux ponts.

6. Jante selon la revendication 4, caractérisée par le fait que la cheminée (28) est taraudée à sa surface interne.

7. Jante selon la revendication 5, caractérisée par le fait que chaque cheminée reçoit un insert globalement cylindrique dont le corps présente une longueur voisine de la distance entre les deux ponts, et le diamètre externe est sensiblement égal au diamètre interne de la cheminée.

8. Jante selon la revendication 7, caractérisée par le fait que l'insert présente dans sa partie supérieure des griffes (20a, 20b, 20c, 20d) prévues pour se planter dans la paroi de la cheminée.

9. Jante selon la revendication 6 et 7, caractérisée par le fait que chaque cheminée reçoit un insert globalement cylindrique dont la partie supérieure du corps présente un filetage (27) prévu pour coopérer avec le taraudage de la surface interne de la cheminée.

10. Roue, notamment roue de cycle, caractérisée par le fait qu'elle présente une jante selon l'une quelconque des revendications 4 à 9.
